# FASCICULE DE BREVET EUROPEEN

(11) **EP 3 116 740 B1**
(45) Date de publication et mention de la délivrance du brevet: **11.07.2018**
(21) Numéro de dépôt: 15714555.8
(22) Date de dépôt: 03.03.2015
(51) Int. Cl.: B60L 1/00, B60L 1/02, B60L 1/14, B60L 11/18

(54) **PROCÉDÉ DE GESTION DE L'AUTONOMIE D'UN VÉHICULE ÉLECTRIQUE**
VERFAHREN ZUR VERWALTUNG DER REICHWEITE EINES ELEKTROFAHRZEUGS
METHOD OF MANAGING THE RANGE OF AN ELECTRIC VEHICLE

(30) Priorité: 11.03.2014 FR 1452002
(43) Date de publication de la demande: 18.01.2017
(73) Titulaire: Renault S.A.S., 92100 Boulogne-Billancourt (FR)
(72) Inventeur: CHAUVELIER, Eric, 78320 Le Mesnil Saint Denis (FR)
(86) Numéro de dépôt international: PCT/FR2015/050511
(87) Numéro de publication internationale: WO 2015/136189

(56) Documents cités:
- WO-A2-2013/126263
- US-A1- 2010 083 008
- US-A1- 2013 249 276

## Description

L'invention se rapporte à un procédé de gestion de l'autonomie d'un véhicule électrique. L'autonomie d'un tel véhicule, qui est doté d'une batterie, représente le nombre de kilomètres maximal qu'il peut parcourir, compte-tenu de son stockage d'énergie électrique dans ladite batterie.

Les procédés de gestion de l'autonomie d'un véhicule électrique existent et ont déjà fait l'objet de brevets. On peut par exemple citer le brevet FR2961775, qui se rapporte à un procédé d'estimation et d'affichage de l'autonomie d'un véhicule électrique, ladite autonomie étant estimée et affichée en unité de déplacement. Une unité de déplacement est la somme de l'énergie consommée par unité de déplacement pour faire rouler le véhicule, et de l'énergie consommée par unité de déplacement pour faire fonctionner la climatisation du véhicule. Un tel procédé permet essentiellement de gérer l'autonomie d'un véhicule en fonction de la climatisation du véhicule.

L'autonomie d'un véhicule dépend principalement,
- de la capacité de la batterie,
- du rendement de la chaine de traction,
- des consommateurs tels que par exemple la climatisation ou le chauffage,
- des caractéristiques générales du véhicule comme sa masse, la nature et l'état des pneus, son coefficient de trainée.

Elle est également fonction du type de parcours envisagé, celui-ci pouvant être urbain, autoroutier ou montagnard. Un véhicule électrique est en effet très sensible au profil de mission, et notamment aux vitesses élevées sur autoroute.

Il est important de souligner que, sur un véhicule électrique, la sensibilité de l'autonomie au type de parcours est très marquée comparativement à celle d'un véhicule thermique. En effet, sur un véhicule électrique, cette autonomie peut varier d'un facteur 3 entre deux profils extrêmes.

Comme souligné ci-dessus, cette autonomie est très sensible au fonctionnement d'équipements auxiliaires, comme par exemple celui assurant le chauffage, qui est gratuit en énergie sur un véhicule thermique, et qui constitue une consommation électrique supplémentaire sur un véhicule électrique au détriment de son autonomie.

Il en résulte une grande variabilité de l'autonomie d'un véhicule électrique, notamment en fonction des conditions météorologiques rencontrées. Or, une telle variabilité n'est pas acceptable pour un client, qui ne sait jamais, de façon fiable, sur quelle autonomie il peut compter en empruntant son véhicule.

Un procédé de gestion selon l'invention, vise à rendre quasiment constante l'autonomie estimée d'un véhicule électrique, quelles que soient les conditions d'utilisation du véhicule.

L'invention a pour objet un procédé de gestion de l'autonomie d'un véhicule électrique doté d'une batterie et d'un moteur électrique.

La principale caractéristique d'un procédé selon l'invention est qu'il comprend les étapes suivantes,
- une étape de séparation de la quantité d'énergie électrique stockée dans la batterie en une quantité nominale et une quantité de réserve,
- une étape d'estimation de l'énergie électrique consommée,
- une étape d'estimation de l'autonomie du véhicule réalisée, soit uniquement à partir de la quantité nominale si l'énergie consommée est inférieure à une valeur seuil prédéfinie, soit à partir de ladite quantité nominale et de la quantité de réserve si ladite énergie consommée est supérieure à ladite valeur seuil prédéfinie.

Un tel procédé tend à rendre quasiment constante l'autonomie estimée d'un véhicule électrique, en fonction de l'énergie consommée estimée. Pour ce faire, dans un premier temps, l'énergie électrique globalement stockée dans le véhicule est divisée en une composante majoritaire représentée par la quantité nominale, et par une composante minoritaire, représentée par la quantité de réserve. Ensuite, l'énergie électrique consommée dans le véhicule, que ce soit pour faire avancer le véhicule et pour faire éventuellement fonctionner des équipements auxiliaires tels que par exemple le chauffage, est estimée en temps réel lors d'une phase de roulage du véhicule. Schématiquement, si cette consommation électrique estimée est raisonnable, fonctionner des équipements auxiliaires tels que par exemple le chauffage, est estimée en temps réel lors d'une phase de roulage du véhicule. Schématiquement, si cette consommation électrique estimée est raisonnable, alors seule la quantité d'énergie nominale est utilisée. En revanche, si cette consommation électrique estimée est élevée, alors la quantité de réserve est également sollicitée conjointement avec la quantité nominale, pour fournir l'énergie électrique globale, nécessaire à la propulsion du véhicule et au fonctionnement éventuel des équipements auxiliaires. De cette manière, l'autonomie d'un véhicule électrique apparaitra constante à un client, ou en tout cas peu variable, ceci quelle que soit sa consommation d'énergie électrique lorsqu'il roule avec son véhicule. La quantité de réserve peut être assimilable à une quantité d'appoint qui n'est utilisée que sous certaines conditions de consommation. Il est supposé qu'un tel procédé est piloté automatiquement par un équipement électronique, associé à un logiciel approprié.

Avantageusement, l'utilisation de la quantité d'énergie de réserve dans le cas où l'énergie consommée estimée est supérieure à la valeur seuil prédéfinie, est effectuée dès le début de la phase de roulage du véhicule. En effet, selon un procédé d'estimation selon l'invention, la quantité d'énergie nominale et la quantité d'énergie de réserve sont utilisées simultanément et non pas l'une après l'autre, comme cela est traditionnellement le cas avec un moteur à carburant doté d'une réserve d'essence, ladite réserve n'étant utilisée que lorsque le réservoir à carburant principal est complètement vide.

De façon préférentielle, l'étape d'estimation de l'énergie consommée est réalisée pour une durée prédéfinie de roulage. A titre d'exemple, l'ordre de grandeur d'une telle durée prédéfinie est voisin d'une minute.

Selon un autre mode de réalisation préféré d'un procédé d'estimation selon l'invention, l'étape d'estimation de l'énergie consommée est réalisée pour une distance prédéterminée de roulage au régime courant prélevé à la batterie.

Préférentiellement, l'énergie consommée dépend d'au moins un paramètre à choisir parmi le fonctionnement d'au moins un équipement auxiliaire, le style de conduite du chauffeur et le type de réseau routier emprunté. En effet, ces trois paramètres ont une influence prédominante sur la consommation électrique du véhicule, et peuvent ainsi engendrer des différences importantes sur ladite consommation. Un équipement auxiliaire d'un véhicule et un équipement fonctionnant à l'énergie électrique, et qui ne sert pas à propulser le véhicule.

De façon avantageuse, un procédé de gestion selon l'invention, comprend une étape d'alimentation des équipements auxiliaires uniquement à partir de la quantité d'énergie de réserve, dans le cas où l'énergie consommée estimée est inférieure à la valeur seuil prédéfinie. De cette manière, lorsque la consommation électrique du véhicule est raisonnable, la quantité d'énergie de réserve, qui n'est pas sollicitée pour propulser le véhicule, est systématiquement affectée au fonctionnement d'équipements auxiliaires, de manière à préserver une autonomie quasiment constante et plus élevée du véhicule, fondée sur la quantité nominale d'énergie.

Avantageusement, l'étape d'alimentation des équipements auxiliaires par la quantité d'énergie de réserve, s'effectue dès le début de la phase de roulage du véhicule.

De façon préférentielle, les équipements auxiliaires sont à choisir parmi un chauffage, une climatisation, un éclairage et un dispositif d'émission de son. Un dispositif d'émission de son peut par exemple être représenté par un autoradio et/ou un lecteur de CD.

Préférentiellement, un procédé de gestion selon l'invention, comprend une étape d'affichage de l'autonomie du véhicule sans aucune référence à une quelconque quantité d'énergie de réserve. De cette manière, le client du véhicule est informé de l'autonomie de son véhicule, uniquement par l'intermédiaire de la quantité nominale d'énergie électrique. Il ne sera donc pas perturbé par des affichages variables d'autonomie, s'appuyant tantôt sur la quantité nominale, tantôt sur la somme des quantités nominale et de réserve, en fonction des conditions de roulage du véhicule.

De façon avantageuse, la quantité d'énergie de réserve est comprise entre 5% et 20% de l'énergie électrique globale, stockée dans la batterie.

Un procédé de gestion selon l'invention, présente l'avantage de gommer les disparités d'autonomie d'un véhicule électrique, liées à l'énergie électrique consommée par ledit véhicule. De cette manière, un client de véhicule électrique sera satisfait de pouvoir compter sur une autonomie quasiment constante de son véhicule, quelles que soient les conditions d'utilisation de ce véhicule. Un tel procédé a de plus l'avantage de pouvoir réaffecter la quantité d'énergie électrique de réserve, au fonctionnement d'équipements auxiliaires, dans le cas où la consommation électrique du véhicule est faible.

On donne ci-après une description détaillée d'un mode de réalisation préféré d'un procédé de gestion selon l'invention.

Actuellement, de façon schématique, un client peut effectuer plus de 150 km sur un parcours périurbain, sans utiliser d'équipements auxiliaires, tels que par exemple, un chauffage ou une climatisation.

En revanche, ce même client ne peut plus effectuer que 80 km sur ce même parcours en hiver, avec le chauffage, ou sur un parcours autoroutier.

Cette disparité de l'autonomie d'un véhicule électrique n'est pas satisfaisante pour un client, qui ne sait jamais combien de kilomètres son véhicule peut encore parcourir, en fonction de l'utilisation ou non d'équipements auxiliaires, du type de conduite adoptée et de la nature du réseau routier emprunté.

Un procédé de gestion selon l'invention vise à rendre l'autonomie d'un véhicule électrique quasi-constante, en utilisant une quantité d'énergie de réserve dans la batterie, utilisée progressivement et sous certaines conditions au cours d'une phase de roulage du véhicule.

Concrètement, un tel procédé de gestion est piloté automatiquement par un équipement électronique, associé à un logiciel approprié. Ledit procédé comprend les étapes suivantes :
- une étape de séparation de la quantité d'énergie électrique stockée dans la batterie électrique, en une quantité nominale et une quantité de réserve. La quantité d'énergie électrique de réserve représente entre 5% et 20% de la quantité globale de l'énergie électrique stockée.
- une étape d'estimation de l'énergie électrique consommée, ladite étape étant mise en oeuvre dès le début d'une phase de roulage du véhicule. Cette étape d'estimation peut s'effectuer, soit sur une période significative prédéfinie, soit sur une distance prédéterminée au régime courant prélevé à la batterie. Cette étape consiste essentiellement en une mesure de l'état de charge de la batterie à un instant donné. L'énergie électrique consommée dans un véhicule électrique dépend essentiellement de trois paramètres :
   - l'utilisation d'équipements auxiliaires tels que par exemple, le chauffage, la climatisation ou l'éclairage. La consommation électrique liée à cette utilisation s'effectue au détriment de l'autonomie kilométrique du véhicule,
   - le type de conduite adoptée par le conducteur. Si cette conduite est souple, la consommation électrique sera plutôt faible. Si au contraire, elle est nerveuse entrecoupée de phases d'accélération brutales, cette consommation sera plutôt élevée,
   - le réseau routier emprunté. Le réseau routier peut être divisé en trois catégories principales : un réseau autoroutier engendrant une consommation électrique élevée en raison de la vitesse importante du véhicule, un réseau urbain peu consommateur d'énergie électrique, et un réseau montagnard, nécessitant une consommation électrique élevée pour tracter le véhicule sur des routes en pente.
   Ainsi, la combinaison de ces trois paramètres engendre une multiplicité de configurations de consommation électrique du véhicule.
   - une étape d'estimation de l'autonomie du véhicule réalisée, soit uniquement à partir de la quantité nominale si l'énergie consommée est inférieure à une valeur seuil prédéfinie, soit à partir de ladite quantité nominale et de la quantité de réserve si ladite énergie consommée est supérieure à ladite valeur seuil prédéfinie. De cette manière, si la consommation électrique du véhicule, qui est fonction des trois paramètres principaux définis ci-avant, est inférieure à une valeur seuil, alors la consommation électrique s'effectuera uniquement en puisant dans la quantité nominale d'énergie électrique. Si en revanche, cette consommation électrique est supérieure à cette valeur seuil, alors ladite consommation s'effectuera à partir conjointement de la quantité nominale et la quantité de réserve. Cette quantité de réserve sert de quantité énergétique d'appoint, apte à suppléer la quantité nominale pour obtenir une autonomie du véhicule qui soit quasiment constante et égale à celle obtenue lorsque la consommation électrique est faible et provient uniquement de la quantité nominale d'énergie électrique. Pour obtenir ainsi une autonomie quasiment constante du véhicule, la quantité nominale et la quantité de réserve sont utilisées simultanément, dès le début de la phase de roulage du véhicule, et non pas l'une après l'autre.
   - une étape d'affichage de l'autonomie du véhicule pour informer le client à chaque instant de son trajet du nombre de kilomètres qu'il peut encore parcourir. Cet affichage ne fait nullement mention d'une quelconque quantité d'énergie électrique de réserve, et se focalise uniquement sur la quantité nominale. De cette manière, le niveau énergétique affiché est quasiment constant, évitant au client de lire des niveaux énergétiques variables en fonction de la consommation électrique du véhicule, et dont il ne comprendrait pas l'origine.

Dans le cas où la consommation électrique du véhicule est inférieure à la valeur seuil prédéfinie, puisque seule la quantité nominale est utilisée pour assurer la propulsion électrique du véhicule, la quantité de réserve est alors affectée exclusivement à l'alimentation d'équipements électriques auxiliaires dans le véhicule. Cette affectation est réalisée dès le début de la phase de roulage du véhicule, et non pas après que la totalité de la quantité nominale de l'énergie électrique ait été consommée. Ces équipements auxiliaires, qui ne jouent aucun rôle au niveau de la propulsion du véhicule, peuvent, par exemple, remplir des fonctions d'éclairage, de climatisation ou de chauffage.

Ainsi, dans la mesure du possible, la quantité de réserve de la batterie, qui peut par exemple être d'environ 3kWh, compense la consommation d'un compresseur de climatisation ou d'une pompe de chaleur, et des thermoplongeurs affectés au chauffage de l'habitacle et le surplus de consommation du DCDC (Haute tension continue/Basse tension continue) du à la thermique habitacle.

Pour le DCDC, on peut considérer une puissance nominale de fonctionnement, par exemple de 500W. Ainsi, toute puissance consommée supérieure à cette puissance nominale est compensée par la quantité de réserve de la batterie.

La compensation de puissance consommée par la thermique habitacle peut être partielle ou totale.

## Revendications

1. Procédé d'estimation de l'autonomie d'un véhicule électrique doté d'une batterie et d'un moteur électrique, **caractérisé en ce qu'**il comprend les étapes suivantes,
- une étape de séparation de la quantité d'énergie électrique stockée dans la batterie en une quantité nominale et une quantité de réserve,
- une étape d'estimation de l'énergie électrique consommée pour une durée prédéfinie de roulage,
- une étape d'estimation de l'autonomie du véhicule réalisée, soit uniquement à partir de la quantité nominale si l'énergie consommée est inférieure à une valeur seuil prédéfinie, soit à partir de ladite quantité nominale et de la quantité de réserve si ladite énergie consommée est supérieure à ladite valeur seuil prédéfinie, l'utilisation de la quantité d'énergie de réserve dans le cas où l'énergie consommée estimée est supérieure à la valeur seuil prédéfinie étant effectuée dès le début de la phase de roulage du véhicule.

2. Procédé d'estimation selon la revendication 1, **caractérisé en ce que** l'étape d'estimation de l'énergie consommée est réalisée pour une distance prédéterminée de roulage au régime courant prélevé à la batterie.

3. Procédé d'estimation selon l'une quelconque des revendications 1 à 2, **caractérisé en ce que** l'énergie consommée dépend d'au moins un paramètre à choisir parmi le fonctionnement d'au moins un équipement auxiliaire, le style de conduite du chauffeur et le type de réseau routier emprunté.

4. Procédé d'estimation selon l'une quelconque des revendications 1 à 3, **caractérisé en ce qu'**il comprend une étape d'alimentation des équipements auxiliaires uniquement à partir de la quantité d'énergie de réserve, dans le cas où l'énergie consommée estimée est inférieure à la valeur seuil prédéfinie.

5. Procédé d'estimation selon la revendication 4, **caractérisé en ce que** l'étape d'alimentation des équipements auxiliaires par la quantité d'énergie de réserve, s'effectue dès le début de la phase de roulage du véhicule.

6. Procédé d'estimation selon l'une quelconque des revendications 3 à 5, **caractérisé en ce que** les équipements auxiliaires sont à choisir parmi un chauffage, une climatisation, un éclairage et un dispositif d'émission de son.

7. Procédé d'estimation selon l'une quelconque des revendications 1 à 6, **caractérisé en ce qu'**il comprend une étape d'affichage de l'autonomie du véhicule ne faisant aucune référence à une quelconque quantité d'énergie de réserve.

8. Procédé d'estimation selon l'une quelconque des revendications 1 à 7, **caractérisé en ce que** la quantité d'énergie de réserve est comprise entre 5% et 20% de l'énergie électrique globale, stockée dans la batterie.

## Patentansprüche

1. Verfahren zur Schätzung der Reichweite eines Elektrofahrzeugs, das mit einer Batterie und einem Elektromotor ausgestattet ist, **dadurch gekennzeichnet, dass** es die folgenden Schritte umfasst:
- einen Schritt des Trennens der in der Batterie gespeicherten Menge an elektrischer Energie in eine Nominalmenge und eine Reservemenge,
- einen Schritt des Schätzens der verbrauchten elektrischen Energie für eine vorgegebene Fahrdauer,
- einen Schritt des Schätzens der Reichweite des Fahrzeugs, der entweder nur ausgehend von der Nominalmenge, wenn die verbrauchte Energie geringer als ein vorgegebener Schwellenwert ist, oder ausgehend von der Nominalmenge und der Reservemenge, wenn die verbrauchte Energie den vorgegebenen Schwellenwert übersteigt, ausgeführt wird, wobei die Nutzung der Reserveenergiemenge in dem Fall, in dem die geschätzte verbrauchte Energie den vorgegebenen Schwellenwert übersteigt, bereits zu Beginn der Fahrphase des Fahrzeugs erfolgt.

2. Schätzverfahren nach Anspruch 1, **dadurch gekennzeichnet, dass** der Schritt des Schätzens der verbrauchten Energie für eine zuvor bestimmte Fahrstrecke mit der aus der Batterie entnommenen üblichen Leistung erfolgt.

3. Schätzverfahren nach einem der Ansprüche 1 bis 2, **dadurch gekennzeichnet, dass** die verbrauchte Energie von mindestens einem Parameter abhängig ist, der unter dem Betrieb mindestens eines Hilfsgeräts, dem Fahrstil des Fahrers und der Art des genutzten Straßennetzes zu wählen ist.

4. Schätzverfahren nach einem der Ansprüche 1 bis 3, **dadurch gekennzeichnet, dass** es für den Fall, dass die geschätzte verbrauchte Energie geringer als der vorgegebene Schwellenwert ist, einen Schritt des Speisens der Hilfsgeräte nur ausgehend von der Reserveenergiemenge umfasst.

5. Schätzverfahren nach Anspruch 4, **dadurch gekennzeichnet, dass** der Schritt des Speisens der Hilfsgeräte mit der Reserveenergiemenge bereits zu Beginn der Fahrphase des Fahrzeugs erfolgt.

6. Schätzverfahren nach einem der Ansprüche 3 bis 5, **dadurch gekennzeichnet, dass** die Hilfsgeräte unter einer Heizung, einer Klimaanlage, einer Beleuchtung und einer Tonabstrahlvorrichtung zu wählen sind.

7. Schätzverfahren nach einem der Ansprüche 1 bis 6, **dadurch gekennzeichnet, dass** es einen Schritt des Anzeigens der Reichweite des Fahrzeugs umfasst, bei dem kein Verweis auf eine Reserveenergiemenge vorgenommen wird.

8. Schätzverfahren nach einem der Ansprüche 1 bis 7, **dadurch gekennzeichnet, dass** die Reserveenergiemenge zwischen 5 % und 20 % der in der Batterie gespeicherten gesamten elektrischen Energie beträgt.

## Claims

1. Method for estimating the range of an electric vehicle equipped with a battery and with an electric motor, **characterized in that** it comprises the following steps,
- a step of separating the amount of electrical energy stored in the battery into a nominal amount and a reserve amount,
- a step of estimating the consumed electrical energy for a predefined running duration,
- a step of estimating the range of the vehicle, carried out either only on the basis of the nominal amount if the consumed energy is lower than a predefined threshold value, or on the basis of said nominal amount and of the reserve amount if said consumed energy is greater than said predefined threshold value, the reserve amount of energy, if the estimated consumed energy is greater than the predefined threshold value, being used upon the commencement of the running phase of the vehicle.

2. Estimation method according to Claim 1, **characterized in that** the step of estimating the consumed energy is carried out for a predetermined running distance in the regime where current is drawn from the battery.

3. Estimation method according to either one of Claims 1 and 2, **characterized in that** the consumed energy depends on at least one parameter to be chosen from among the operation of at least one item of auxiliary equipment, the driving style of the driver and the type of road network being used.

4. Estimation method according to any one of Claims 1 to 3, **characterized in that** it comprises a step of supplying power to the items of auxiliary equipment only from the reserve amount of energy, if the estimated consumed energy is lower than the predefined threshold value.

5. Estimation method according to Claim 4, **characterized in that** the step of supplying power to the items of auxiliary equipment via the reserve amount of energy is performed upon the commencement of the running phase of the vehicle.

6. Estimation method according to any one of Claims 3 to 5, **characterized in that** the items of auxiliary equipment are to be chosen from among a heater, an air-conditioning unit, a light and a sound-emitting device.

7. Estimation method according to any one of Claims 1 to 6, **characterized in that** it comprises a step of displaying the range of the vehicle that makes no reference to any reserve amount of energy.

8. Estimation method according to any one of Claims 1 to 7, **characterized in that** the reserve amount of energy is between 5% and 20% of the overall electrical energy stored in the battery.
